# EUROPÄISCHE PATENTSCHRIFT

(11) **EP 1 522 487 B1**
(45) Veröffentlichungstag und Bekanntmachung des Hinweises auf die Patenterteilung: **14.06.2006**
(21) Anmeldenummer: 04023013.8
(22) Anmeldetag: 28.09.2004
(51) Int. Cl.: B62D 33/06

(54) **Halteelement für einen Kraftfahrzeuggurt**
Vehicle belt clamp
Blocage de sangle pour véhicules

(30) Priorität: 09.10.2003 DE 10346876
(43) Veröffentlichungstag der Anmeldung: 13.04.2005
(73) Patentinhaber: MAN Nutzfahrzeuge Aktiengesellschaft, 80995 München (DE)
(72) Erfinder: Mederle, Günther, Dipl.-Ing. (FH), 85051 Ingolstadt (DE); Hauer, Thomas, 85244 Röhrmoos (DE)

(56) Entgegenhaltungen:
- EP-A- 1 069 031
- FR-A- 2 631 093
- US-A- 3 364 529
- US-B1- 6 292 984

## Beschreibung

Die Erfindung betrifft ein Halteelement zur positionsvariablen Halterung von Bauteilen an einem in einem Kraftfahrzeug vorgesehenen Gurt, gemäß dem Oberbegriff des Anspruchs 1.

Aus der EP 1 069 031 A2 ist eine Schlafliege eines Lastkraftwagens bekannt, die an einer Längsseite von einem vertikal ausfahrbaren Sicherungsnetz begrenzbar ist. Das Sicherungsnetz ist dabei von einer längs der Schlafliege angeordneten Fixierstange aufgenommen, die ihrerseits über hier nicht näher erläuterte Fixierelemente an vertikal verlaufenden, an der Schlafliege befestigten Haltegurten gehalten sind.

Es ist Aufgabe der Erfindung, eine positionsvariable Halterung von Bauteilen an einem Gurt eines Kraftfahrzeug technisch zu optimieren und deren Bedienung zu verbessern.

Diese Aufgabe wird erfindungsgemäß durch die Merkmale des Anspruches 1 gelöst.

Somit ist ein Halteelement zur positionsvariablen Halterung von Bauteilen an einem in einem Kraftfahrzeug vorgesehenen Gurt gegeben, das aus einem das Bauteil tragenden und am Gurt längsverschieblich angeordneten Gehäuse sowie einer an diesem kippbar gelagerten Wippe besteht. Dabei ist der Gurt im wesentlichen zwischen Wippe und Gehäuse hindurchgeführt. In Abhängigkeit der Kippwinkelstellung der Wippe am Gehäuse ist zunächst in einer Schließ-Stellung der Wippe eine lastresistente Positionsfixierung des Halteelementes in einer beliebigen Position auf dem Gurt bewirkt. In einer Hemm-Stellung der Wippe ist in einer ersten Längsrichtung des Gurtes eine selbsthemmende, wenigstens schwerverschiebbare Positionsfixierung des Halteelementes in beliebiger Position auf dem Gurt erzielt. In einer zweiten Längsrichtung des Gurtes ist in der Hemm-Stellung der Wippe eine freie Verschiebbarkeit des Halteelementes auf dem Gurt erzielt. In einer Verschiebe-Stellung der Wippe ist eine positionsbeliebige freie Verschiebbarkeit des Halteelementes auf dem Gurt in dessen beiden Längsrichtungen bewirkt.

Gemäß einer weiteren Ausgestaltung der Erfindung kann die Schließ-Stellung der Wippe durch ihre Positionierung in einer zum Längsverlauf des Gurtes etwa parallelen Stellung (neutralen Kippwinkelstellung) erzielt sein. Dabei kann ein der Wippe zugehöriger Arretiersteg mit einem dem Halteelement zugehörigen Boden zur Klemmung des zwischen Arretiersteg und Boden hindurchgeführten Gurtes gebracht sein.

Gemäß einer weiteren Ausgestaltung der Erfindung kann die Wippe in ihrer Schließ-Stellung am Gehäuse lösbar verrastet sein. Zur Verrastung können hierfür geeignete Mittel vorgesehen sein.

Gemäß einer weiteren Ausgestaltung der Erfindung kann die Wippe gegebenenfalls winklig zueinander verlaufende erste und zweite Wippenschenkel aufweisen, die eine gemeinsame Druckbetätigungsfläche bilden. Die Wippenschenkel können in vorteilhafter Weise gleiche Längen aufweisen.

Gemäß einer weiteren Ausgestaltung der Erfindung kann in der Schließ-Stellung der Wippe der zweite Wippenschenkel auf einem am Gehäuse gebildeten Quersteg zur Anlage kommen.

Gemäß einer weiteren Ausgestaltung der Erfindung kann die Hemm-Stellung der Wippe durch ihre Positionierung in einer zum Längsverlauf des Gurtes wenig geneigten Stellung (erste Kippwinkelstellung) erzielt sein. Dabei kann der erste Wippenschenkel und der Arretiersteg der Wippe in etwa in eine Gleitberührung mit dem Gurt gebracht sein. In dieser Hemm-Stellung der Wippe kann beispielsweise das Halteelement unter einer geringeren Klemmwirkung am Gurt in dessen erster Längsrichtung gegen ein Hinabrutschen gesichert sein. Mit dem Halteelement kann auch das hieran befestigte Bauteil in dieser Position am Gurt gehalten sein. Der Arretiersteg ist dabei an Gurt und Auflaufkulisse zur Anlage gekommen. In der zweiten Längsrichtung des Gurtes ist das Halteelement und das hieran befestigte Bauteil auf dem Gurt in leichterer Verschiebbarkeit hinaufschiebbar. Der Arretiersteg ist dabei aus der klemmenden Kontaktanlage an Gurt und Auflaufkulisse gebracht.

Gemäß einer weiteren Ausgestaltung der Erfindung kann die Verschiebe-Stellung der Wippe durch ihre Positionierung in einer zum Längsverlauf des Gurtes stärker geneigten Stellung (zweite Kippwinkelstellung) erzielt sein. Dabei kann der erste Wippenschenkel in eine manuell ausgeführte Kraftberührung mit dem Gurt und der Arretiersteg der Wippe gegebenenfalls aus der Kontaktberührung mit dem Gurt gebracht sein. Der Gurt kann dabei von dem ersten Wippenschenkel unter manueller Krafteinwirkung einer Bedienperson fortgedrückt sein, wodurch gegebenenfalls der Arretiersteg aus dem Kontakt mit dem Gurt gebracht sein kann.

Gemäß einer weiteren Ausgestaltung der Erfindung kann die Positionierung sowie die Ver- und Entriegelung des Halteelementes auf dem Gurt in besonders vorteilhafter Weise mit einer einzelnen Bedienhand erfolgen.

Gemäß einer weiteren Ausgestaltung der Erfindung kann das Gehäuse des Halteelementes etwa ein U-Profil mit dem Boden und stirnseitig hieran gebildeten und zueinander parallelen Schultern sein, die in Beabstandung zum Boden von dem Quersteg überbrückt sind. Dieser kann einenendes des Gehäuses einen Durchlass für den durch diesen hindurchgeführten Gurt begrenzen.

Gemäß einer weiteren Ausgestaltung der Erfindung können die zueinander parallelen Schultern des Gehäuses in etwa ihrer Längenhälfte koaxiale Durchgangsbohrungen zur gelenkigen Aufnahme von stirnseitig der Wippe gebildeter Zapfen aufweisen.

Gemäß einer weiteren Ausgestaltung der Erfindung können die stirnseitig der Wippe gebildeten Zapfen in etwa der Längenhälfte der Wippe auf dieser angeordnet sein.

Gemäß einer weiteren Ausgestaltung der Erfindung kann auf einer Rückseite des Bodens des Halteelementes oder einer Unterseite des Halteelementes wenigstens eine Aufnahme zur Befestigung des Bauteils gegeben sein.

Gemäß einer weiteren Ausgestaltung der Erfindung kann das von der Aufnahme des Halteelementes gehaltene Bauteil eine Fixierstange sein. Die Fixierstange kann ein Sicherungsnetz einer gegebenenfalls klappbaren Schlafliege eines Nutzfahrzeuges, bspw. eines Lastkraftwagens tragen.

Gemäß einer weiteren Ausgestaltung der Erfindung kann jeweils ein Halteelement am wenigstens einen Gurt der gegebenenfalls klappbaren Schlafliege eines Lastkraftwagens angeordnet sein.

Gemäß einer weiteren Ausgestaltung der Erfindung kann die Aufnahme für die Fixierstange als zwei Aufnahmeaugen ausgeführt sein, welche jeweils an den zueinander parallelen Schultern des Gehäuses im Bereich der dem Quersteg gegenüberliegend abgewandten Rückseite des Bodens zur gemeinsamen Aufnahme der Fixierstange vorgesehen sind.

Gemäß einer weiteren Ausgestaltung der Erfindung kann auf einer Rückseite der Wippe der etwa rechtwinklig von dieser abragende, etwa in Höhe der Zapfen verlaufende Arretiersteg vorgesehen sein, der mit einer im Boden des Gehäuses gebildeten Auflaufkulisse und dem zwischen Auflaufkulisse und Arretiersteg hindurchgeführten Gurt solcherart korrespondiert, dass über die verschiedenen Kippwinkelstellungen der Wippe hinweg deren Schließ-Stellung (neutrale Kippwinkelstellung), Hemm-Stellung (erste Kippwinkelstellung) und Verschiebe-Stellung (zweite Kippwinkelstellung) erzielt ist. Bei einer Drehbewegung der Wippe in ihre einzelnen Kippwinkelstellungen, beispielsweise ausgehend von der manuell gehaltenen Verschließ-Stellung über die Hemm-Stellung bis zur verrasteten Schließ-Stellung kann ein Ende des Arretiersteges der Wippe auf einer gedachten Bewegungsbahn solcherart geführt sein, dass sich das Ende des Arretiersteges einer im Boden des Gehäuses gebildeten Auflaufkulisse graduell bis zur völligen Klemmwirkung von Arretiersteg, Gurt und Auflaufkulisse nähert und sich bei einer entgegengesetzt gerichteten Drehbewegung der Wippe wieder von dieser Auflaufkulisse entfernt.

Gemäß einer weiteren Ausgestaltung der Erfindung können innenseitig der Schultern des Gehäuses hiervon abragende Auflauframpen gebildet sein, die solcherart mit Stirnseiten der kippfähigen Wippe zusammenwirken, dass diese in ihrer Schließ-Stellung zusätzlich zu ihrer Anlage am Quersteg von den Auflauframpen im Gehäuse verrastet und unter Überwindung einer Übertotpunktwirkung wieder lösbar ist.

Gemäß einer weiteren Ausgestaltung der Erfindung kann die Wippe und das Gehäuse in etwa gleiche Längen aufweisen. Der Boden des Gehäuses kann zwecks Positionierung der Wippe in der Verschiebe-Stellung gegenüber den Schultern des Gehäuses verkürzt ausgeführt sein. So kann eine stärker geneigte Stellung der Wippe (zweite Kippwinkelstellung) gegenüber dem Gehäuse ermöglicht sein. Der erste Wippenschenkel kann somit zwischen den beiden Schultern des Gehäuses hindurchtauchen.

Gemäß einer weiteren Ausgestaltung der Erfindung kann wenigstens der erste Wippenschenkel eine dem Gurt zugewandte, gleitkufenartige Ausendung aufweisen.

Die Erfindung ist anhand eines in der Zeichnung dargestellten Ausführungsbeispieles näher beschrieben.

Es zeigen:
- Fig. 1: in perspektivischer Darstellung eine klappbare Schlafliege für ein Fahrerhaus eines Lastkraftwagens mit an Gurten angeordneten Halteelementen,
- Fig. 2: in perspektivischer Darstellung ein Halteelement gemäß Fig. 1 in einer Schließ-Stellung,
- Fig. 3: in Seitenansicht und in Schnittdarstellung ein in einer Schließ-Stellung befindliches Halteelement gemäß Fig. 2,
- Fig. 4: in perspektivischer Darstellung ein Halteelement gemäß Fig. 1 in einer Hemm-Stellung,
- Fig. 5: in Seitenansicht und in Schnittdarstellung ein in einer Hemm-Stellung befindliches Halteelement gemäß Fig. 4,
- Fig. 6: in Seitenansicht und in Schnittdarstellung ein in einer Verschiebe-Stellung befindliches Halteelement gemäß Fig. 1,
- Fig. 7: ausschnittsweise und in Seitenansicht ein vergrößertes Detail eines in einer Verschiebe-Stellung befindlichen Halteelementes gemäß Fig. 6,
- Fig. 8: in perspektivischer und vergrößerter Darstellung ein in einer Hemm-Stellung befindliches Halteelement gemäß Fig. 5,
- Fig. 9: in perspektivischer und vergrößerter Darstellung ein in einer Schließ-Stellung befindliches Halteelement gemäß Fig. 3,
- Fig. 10: in perspektivischer und vergrößerter Darstellung ein Gehäuse des Halteelementes gemäß Fig. 9 und
- Fig. 11: in perspektivischer und vergrößerter Darstellung der Rückansicht einer Wippe des Halteelementes gemäß Fig. 9.

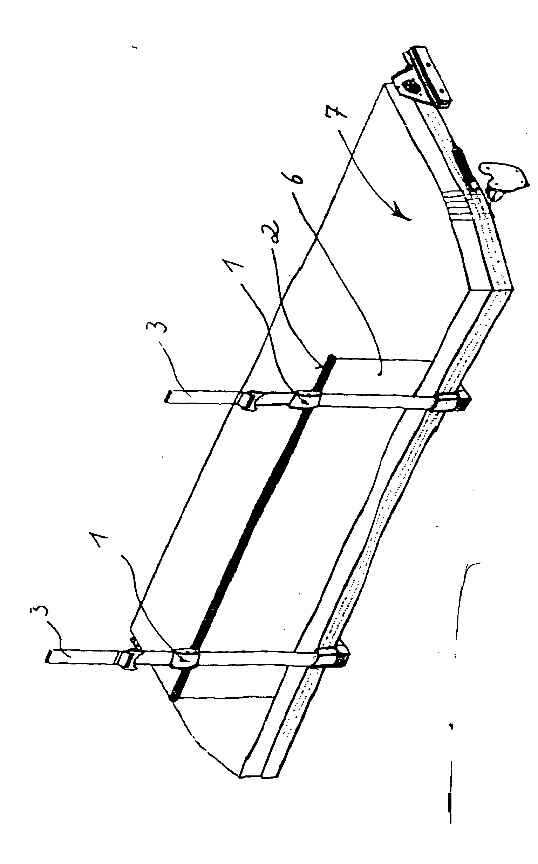

In Fig. 1 ist in perspektivischer Darstellung eine klappbare Schlafliege (7) für ein Fahrerhaus eines Lastkraftwagens gezeigt. Die klappbare Schlafliege (7) ist in diesem Ausführungsbeispiel an ihrer einen Längsseite über Lager und an ihrer anderen Längsseite mittels zweier Gurte (3) in einer Gebrauchslage im Fahrerhaus gehalten. An den beiden Gurten (3) befinden sich Halteelemente (1) zur bedarfsweisen Fixierung einer ein Sicherungsnetz (6) haltenden Fixierstange (2). Anstelle der Befestigung einer Fixierstange (2) an den Gurten (3) einer Schlafliege (7) mittels der Halteelemente (1) sind alternative Einsatzmöglichkeiten für letztere denkbar, bspw. für die Sicherung und Fixierung von in Kraftfahrzeugen anzuordnender Bauteile, Gegenstände oder Gepäck.

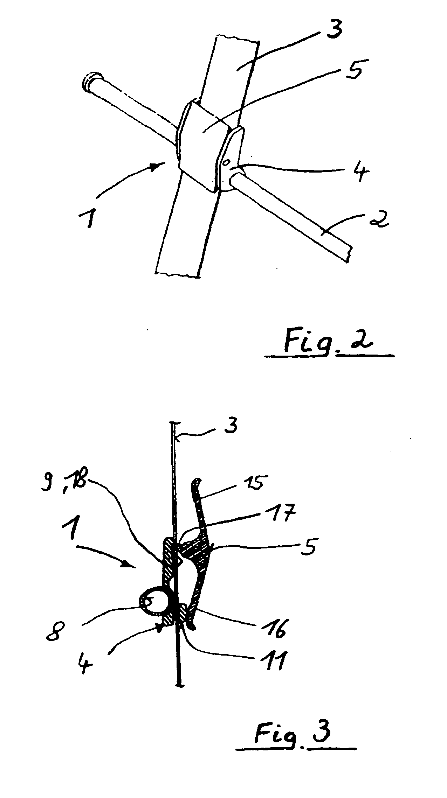

In Fig. 2 ist das in Fig. 1 gezeigte Halteelement (1) in einer Schließ-Stellung perspektivisch dargestellt. Das Halteelement (1) besteht im wesentlichen aus einem Gehäuse (4) und einer hieran drehbar gelagerten Wippe (5). Der Gurt (3) ist zwischen Wippe (5) und Gehäuse (4) hindurchgeführt. In einem unteren Bereich des Gehäuses (4) ist die Fixierstange (2) hindurchgeführt und aufgenommen.

In Fig. 3 ist in Seitenansicht und in Schnittdarstellung das in Fig. 2 gezeigte Halteelement (1) in einer Schließ-Stellung befindlich dargestellt. Das am Gurt (3) zunächst längsverschieblich angeordnete Halteelement (1) ist in Abhängigkeit der Kippwinkelstellung der ihm zugehörigen Wippe (5) gegenüber dem Gehäuse (4) in einer Schließ-Stellung der Wippe (5) in eine lastresistente Positionsfixierung in beliebiger Position am Gurt (3) bringbar.

Die Wippe (5) weist in diesem Ausführungsbeispiel zwei winklig zueinander angeordnete erste und zweite Wippenschenkel (15, 16) auf, die eine gemeinsame Druckbetätigungsfläche aufweisen.

Die Schließ-Stellung der Wippe (5) ist durch ihre Positionierung in einer zum Längsverlauf des Gurtes (3) etwa parallelen Stellung (neutralen Kippwinkelstellung) erzielt. Dabei ist ein der Wippe (5) zugehöriger Arretiersteg (17) mit einem dem Halteelement (1) zugehörigen Boden (9) mit Auflaufkulisse (18) zur Klemmung des zwischen Arretiersteg (17) und Boden (9) hindurchgeführten Gurtes (3) gebracht. Zusätzlich kommt in dieser Schließ-Stellung der Wippe (5) der zweite Wippenschenkel (16) auf einem am Gehäuse (4) gebildeten Quersteg (11) zur Anlage.

Auf einer Rückseite des Bodens (9) des Gehäuses (4) ist eine Aufnahme (8) zur Befestigung der Fixierstange (2) vorgesehen. Die Aufnahme (8) ist hier als Aufnahmeauge ausgeführt und in einem unteren Bereich des Gehäuses (4) angeordnet.

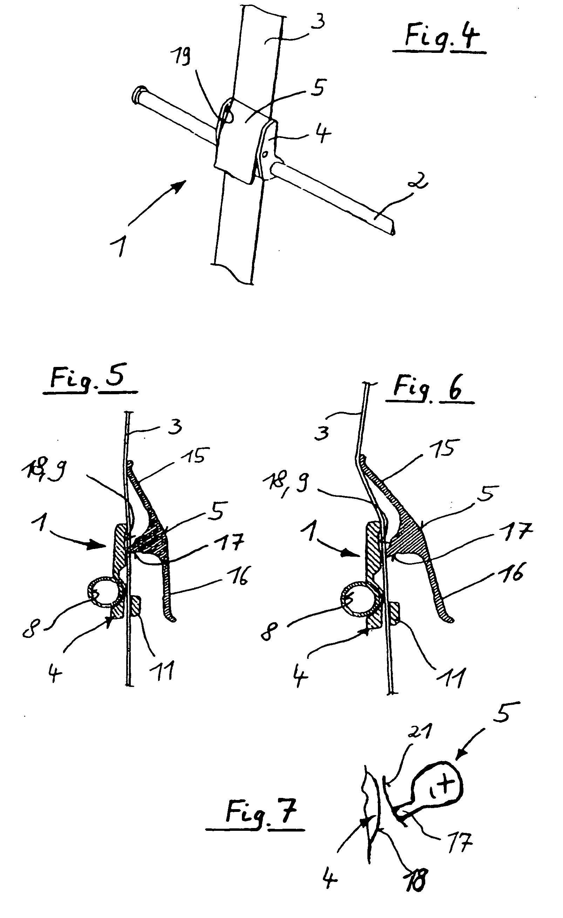

In Fig. 4 ist in perspektivischer Darstellung das Halteelement (1) in einer Hemm-Stellung der Wippe (5) gezeigt.

In Fig. 5 ist in Seitenansicht und in Schnittdarstellung das in dieser Hemm-Stellung befindliche Halteelement (1) gezeigt. In dieser Hemm-Stellung der Wippe (5) ist in einer ersten Längsrichtung des Gurtes (3) eine selbsthemmende, wenigstens schwerverschiebbare Positionsfixierung des Halteelementes (1) in beliebiger Position auf dem Gurt (3) ermöglicht. In einer zweiten Längsrichtung des Gurtes (3) ist eine freie Verschiebbarkeit des Halteelementes (1) auf dem Gurt (3) erzielbar.

Die Hemm-Stellung der Wippe (5) ist durch ihre Positionierung in einer zum Längsverlauf des Gurtes (3) wenig geneigten Stellung (erste Kippwinkelstellung) erzielbar. Dabei ist der erste Wippenschenkel (15) und der Arretiersteg (1) der Wippe (5) in etwa in eine Gleitberührung mit dem Gurt (3) gebracht, wodurch ein Gleiten in der einen Längsrichtung und ein Selbsthemmen in der anderen Längsrichtung des Gurtes (3) ermöglicht ist.

In Fig. 6 ist in Seitenansicht und in Schnittdarstellung das in einer Verschiebe-Stellung befindliche Halteelement (1) gezeigt. Bei einer Verschiebe-Stellung der Wippe (5) ist eine positionsbeliebige freie Verschiebbarkeit des Halteelementes (1) auf dem Gurt (3) in dessen beiden Längsrichtungen bewirkt.

Die Verschiebe-Stellung der Wippe (5) ist durch ihre Positionierung in einer zum Längsverlauf des Gurtes (3) stärker geneigten Stellung (zweite Kippwinkelstellung) erzielbar. Dabei ist der erste Wippenschenkel (15) in eine manuell ausgeführte Kraftberührung mit dem Gurt (3) und der Arretiersteg (1) der Wippe (5) gegebenenfalls aus der Kontaktberührung mit dem Gurt (3) bringbar, wodurch ein freies Verschieben des Halteelementes auf dem Gurt (3) ermöglicht ist.

Die Positionierung sowie die Ver- und Entriegelung des Halteelementes (1) auf dem Gurt (3) ist in vorteilhafter Weise mit einer Bedienhand durchführbar.

In Fig. 7 ist ausschnittsweise und in Seitenansicht ein vergrößertes Detail des in einer Verschiebe-Stellung befindlichen Halteelementes (1) gezeigt. Dabei ist ein Ende des Arretiersteges (17) der Wippe (5) bei einer Drehbewegung der Wippe (5) auf einer Bewegungsbahn (21) solcherart geführt, dass sich das Ende des Arretiersteges (17) einer im Boden (9) des Gehäuses (4) gebildeten Auflaufkulisse (18) Kontinuierlich bis zur völligen Klemmwirkung vom Arretiersteg (17), Gurt (3) und Auflaufkulisse (18) nähern und bei entgegengesetzter Drehrichtung der Wippe (5) hiervon entfernen kann. Der hier nicht gezeigte, jedoch zwischen Arretiersteg (17) und Auflaufkulisse (18) befindliche Gurt (3) kann somit geklemmt, touchiert oder freigegeben werden.

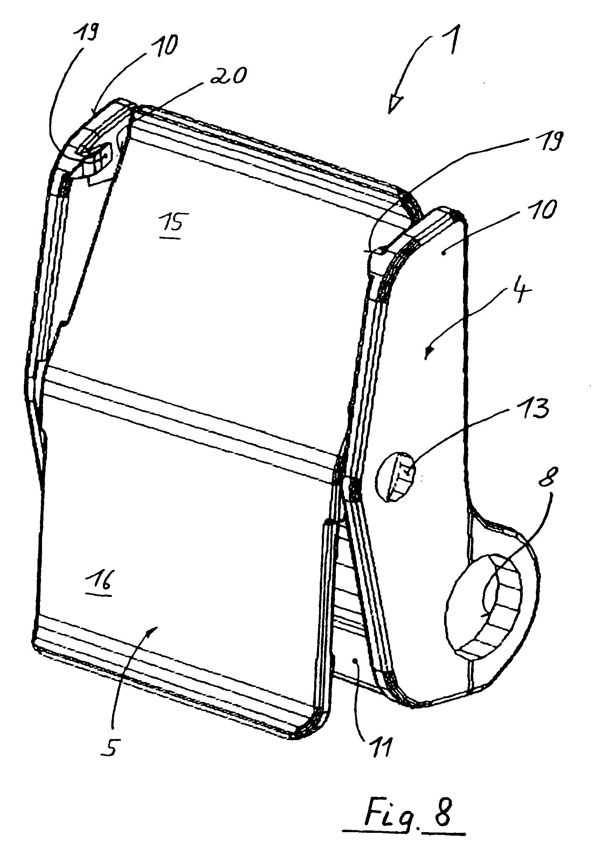

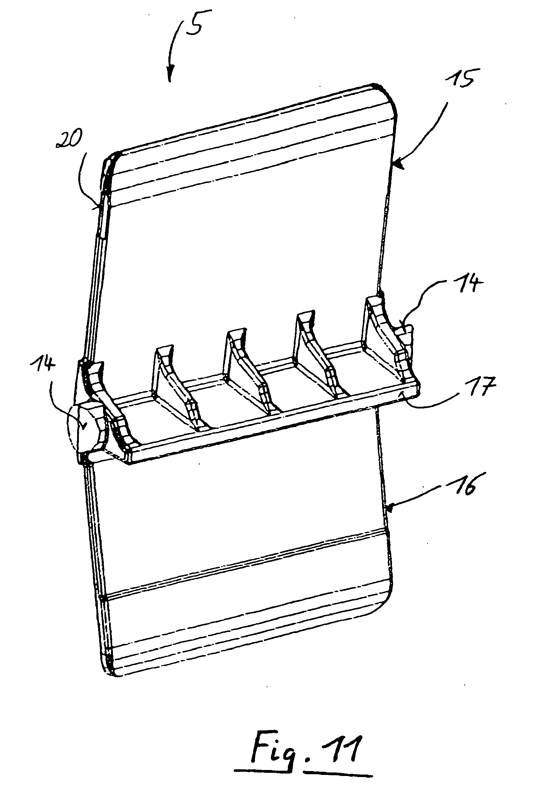

In Fig. 8 ist in perspektivischer und vergrößerter Darstellung das in einer Hemm-Stellung befindliche Halteelement (1) gezeigt. Die zueinander parallelen Schultern (10) des Gehäuses (4) weisen in etwa ihrer Längenhälfte koaxiale Durchgangsbohrungen (13) zur gelenkigen Aufnahme von stirnseitig der Wippe (5) gebildeter Zapfen (14) - wie sie in Fig. 11 gezeigt sind - auf. Die stirnseitig der Wippe (5) gebildeten Zapfen (14) sind hier bspw. in etwa der Längenhälfte der Wippe (14) auf dieser angeordnet.

Innenseitig der Schultern (10) des Gehäuses (4) sind hiervon abragende Auflauframpen (19) gebildet, die solcherart mit Stirnseiten (20) der kippfähigen Wippe (5) zusammenwirken, dass die Wippe (5) in ihrer Schließ-Stellung zusätzlich zu ihrer Anlage am Quersteg (11) von den Auflauframpen (19) im Gehäuse (4) verrastbar und unter Überwindung einer Übertotpunktwirkung wieder lösbar ist.

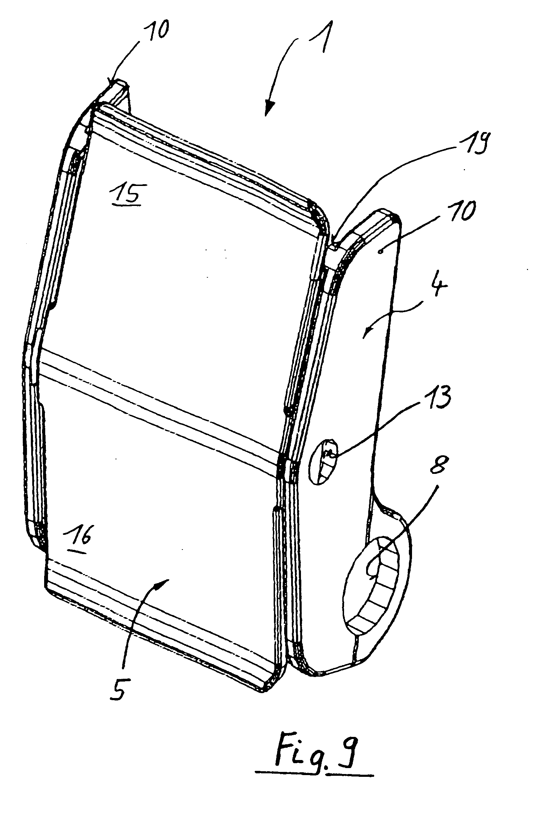

In Fig. 9 ist in perspektivischer und vergrößerter Darstellung das in einer Schließ-Stellung befindliche Halteelement (1) gezeigt. Die Wippe (5) und das Gehäuse (4) weisen in diesem Ausführungsbeispiel in etwa gleiche Längen auf. Beide Wippenschenkel (15, 16) weisen eine dem Gurt (3) zugewandte, gleitkufenartige Ausendung auf.

Das Gehäuse (4) des Halteelementes (1) ist etwa ein U-Profil mit dem Boden (9) und stirnseitig hieran gebildeten und zueinander parallelen Schultern (10), die in Beabstandung zum Boden (9) von dem Quersteg (11) überbrückt sind. Dieser Quersteg (11) begrenzt einenendes des Gehäuses (4) einen Durchlass (12) für den durch diesen hindurchgeführten Gurt (3).

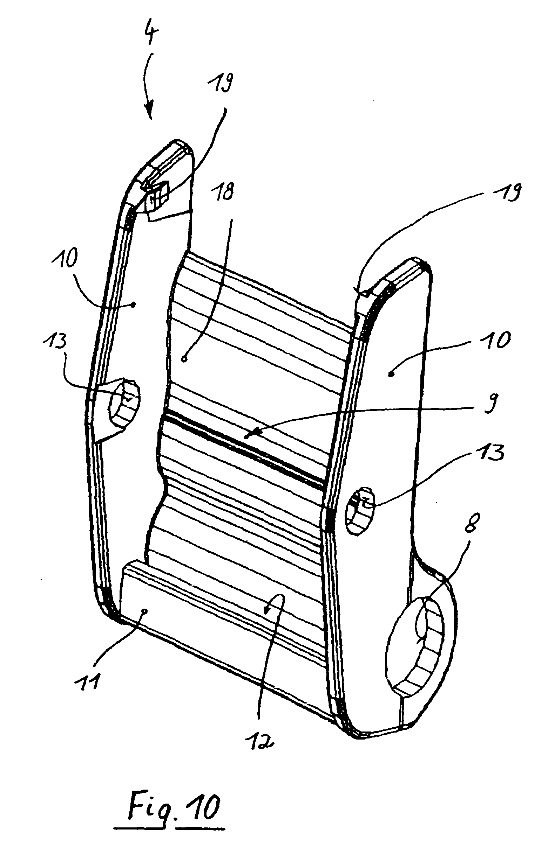

In Fig. 10 ist in perspektivischer und vergrößerter Darstellung das Gehäuse (4) des Halteelementes (1) gezeigt. Der Boden (9) des Gehäuses (4) ist zwecks Positionierung der Wippe (5) in der Verschiebe-Stellung gegenüber den Schultern (10) des Gehäuses (4) verkürzt ausgeführt. Somit kann eine stärker geneigte Stellung der Wippe (5) (zweite Kippwinkelstellung) gegenüber dem Gehäuse (4) ermöglicht sein. Der erste Wippenschenkel (15) kann somit zwischen den beiden Schultern (10) des Gehäuses (4) hindurchtauchen.

In Fig. 11 ist in perspektivischer und vergrößerter Darstellung die Wippe (5) des Halteelementes (1) in einer Rückansicht gezeigt. Auf einer Rückseite der Wippe (5) ist der etwa rechtwinklig von dieser abragende, etwa in Höhe der Zapfen (14) verlaufende Arretiersteg (17) angeordnet, der mit einer im Boden (9) des Gehäuses (14) gebildeten Auflaufkulisse (18) (Fig. 7 und 10) und dem zwischen Auflaufkulisse (18) und Arretiersteg (17) hindurchgeführten Gurt (3) solcherart korrespondiert, dass über die verschiedenen Kippwinkelstellungen der Wippe (5) hinweg deren Schließ-Stellung, Hemm-Stellung und Verschiebe-Stellung erzielt ist.

### Bezugszeichenliste

- 1: Halteelement
- 2: Bauteil (z. B. Fixierstange)
- 3: Gurt
- 4: Gehäuse
- 5: Wippe
- 6: Sicherungsnetz
- 7: Schlafliege
- 8: Aufnahmeauge
- 9: Boden
- 10: Schultern
- 11: Quersteg
- 12: Durchlass
- 13: Durchgangsbohrung (Koaxial; in Schulter)
- 14: Zapfen
- 15: erster Wippenschenkel
- 16: zweiter Wippenschenkel
- 17: Arretiersteg
- 18: Ausmuldung, Auflaufkulisse
- 19: Auflauframpen
- 20: Stirnseiten der Wippe
- 21: Bewegungsbahn

## Patentansprüche

1. Halteelement (1) zur positionsvariablen Halterung von Bauteilen (2) an einem in einem Kraftfahrzeug vorgesehenen Gurt (3), **dadurch gekennzeichnet, dass** das Halteelement (1) aus einem das Bauteil (2) tragenden und am Gurt (3) längsverschieblich angeordneten Gehäuse (4) sowie einer an diesem kippbar gelagerten Wippe (5) besteht, wobei der Gurt (3) im wesentlichen zwischen Wippe (5) und Gehäuse (4) hindurchgeführt ist, und wobei in Abhängigkeit der Kippwinkelstellung der Wippe (5) am Gehäuse (4)
- bei einer Schließ-Stellung der Wippe (5) eine lastresistente Positionsfixierung des Halteelementes (1) in einer beliebigen Position auf dem Gurt (3) bewirkt ist,
- bei einer Hemm-Stellung der Wippe (5) in einer ersten Längsrichtung des Gurtes (3) eine selbsthemmende, wenigstens schwerverschiebbare Positionsfixierung des Halteelementes (1) in beliebiger Position auf dem Gurt (3) und in einer zweiten Längsrichtung des Gurtes (3) eine freie Verschiebbarkeit des Halteelementes (1) auf dem Gurt (3) erzielt ist,
- bei einer Verschiebe-Stellung der Wippe (5) eine positionsbeliebige freie Verschiebbarkeit des Halteelementes (1) auf dem Gurt (3) in dessen beiden Längsrichtungen bewirkt ist.

2. Halteelement nach Anspruch 1, **dadurch gekennzeichnet, dass** die Schließ-Stellung der Wippe (5) durch ihre Positionierung in einer zum Längsverlauf des Gurtes (3) etwa parallelen Stellung, bzw. neutralen Kippwinkelstellung erzielt ist, wobei ein der Wippe (5) zugehöriger Arretiersteg (17) mit einem dem Halteelement (1) zugehörigen Boden (9) zur Klemmung des zwischen Arretiersteg (17) und Boden (9) hindurchgeführten Gurtes (3) gebracht ist.

3. Halteelement nach einem der Ansprüche 1 und 2, **dadurch gekennzeichnet, dass** die Wippe (5) in ihrer Schließ-Stellung am Gehäuse (4) lösbar verrastet ist.

4. Halteelement nach Anspruch 1 bis 3, **dadurch gekennzeichnet, dass** die Wippe (5) ggf. winklig zueinander verlaufende erste und zweite Wippenschenkel (15,16) aufweist, die eine gemeinsame Druckbetätigungsfläche bilden.

5. Halteelement nach Anspruch 1 bis 4, **dadurch gekennzeichnet, dass** in der Schließ-Stellung der Wippe (5) der zweite Wippenschenkel (16) auf einem am Gehäuse (4) gebildeten Quersteg (11) zur Anlage kommt.

6. Halteelement nach einem der Ansprüche 1 und 2, **dadurch gekennzeichnet, dass** die Hemm-Stellung der Wippe (5) durch ihre Positionierung in einer zum Längsverlauf des Gurtes (3) wenig geneigten Stellung, bzw. erste Kippwinkelstellung erzielt ist, wobei der erste Wippenschenkel (15) und der Arretiersteg (17) der Wippe (5) in etwa in eine Gleitberührung mit dem Gurt (3) gebracht ist.

7. Halteelement nach einem der Ansprüche 1 und 2, **dadurch gekennzeichnet, dass** die Verschiebe-Stellung der Wippe (5) durch ihre Positionierung in einer zum Längsverlauf des Gurtes (3) stärker geneigten Stellung, bzw. zweite Kippwinkelstellung erzielt ist, wobei der erste Wippenschenkel (15) in eine manuell ausgelöste Kraftberührung mit dem Gurt (3) und der Arretiersteg (17) der Wippe (5) ggf. aus der Kontaktberührung mit dem Gurt (3) gebracht ist.

8. Halteelement nach einem oder mehreren der vorangegangenen Ansprüche 1 bis 7, **dadurch gekennzeichnet, dass** die Positionierung sowie die Ver- und Entriegelung des Halteelementes (1) auf dem Gurt (3) mit einer einzelnen Bedienhand erfolgt.

9. Halteelement nach einem oder mehreren der vorangegangenen Ansprüche 1 bis 8, **dadurch gekennzeichnet, dass** das Gehäuse (4) des Halteelementes (1) etwa ein U-Profil mit dem Boden (9) und stirnseitig hieran gebildeten und zueinander parallelen Schultern (10) ist, die in Beabstandung zum Boden (9) von dem Quersteg (11) überbrückt sind, welcher einenendes des Gehäuses (4) einen Durchlass (12) für den durch diesen hindurchgeführten Gurt (3) begrenzt.

10. Halteelement nach Anspruch 9, **dadurch gekennzeichnet, dass** die zueinander parallelen Schultern (10) des Gehäuses (4) in etwa ihrer Längenhälfte koaxiale Durchgangsbohrungen (13) zur gelenkigen Aufnahme von stirnseitig der Wippe (5) gebildeter Zapfen (14) aufweisen.

11. Halteelement nach Ansprüche 10, **dadurch gekennzeichnet, dass** die stirnseitig der Wippe (5) gebildeten Zapfen (14) in etwa der Längenhälfte der Wippe (14) auf dieser angeordnet sind.

12. Halteelement nach einem der Ansprüche 9 und 10, **dadurch gekennzeichnet, dass** auf einer Rückseite des Bodens (9) des Halteelementes (4) oder einer Unterseite des Halteelementes (4) wenigstens eine Aufnahme (8) zur Befestigung des Bauteils (2) gegeben ist.

13. Halteelement nach Anspruch 12, **dadurch gekennzeichnet, dass** das von der Aufnahme (8) des Halteelementes (4) gehaltene Bauteil (2) eine Fixierstange ist, und dass diese Fixierstange (2) ein Sicherungsnetz (6) einer ggf. klappbaren Schlafliege (7) eines Nutzfahrzeuges, bspw. eines Lastkraftwagens trägt.

14. Halteelement nach Anspruch 13, **dadurch gekennzeichnet, dass** jeweils ein Halteelement (1) am wenigstens einen Gurt (3) der ggf. klappbaren Schlafliege (7) eines Lastkraftwagens angeordnet ist.

15. Halteelement nach Anspruch 13, **dadurch gekennzeichnet, dass** die Aufnahme (8) für die Fixierstange (2) als Aufnahmeaugen (8) ausgeführt sind, welche jeweils an den zueinander parallelen Schultern (10) des Gehäuses (4) im Bereich der dem Quersteg (11) gegenüberliegend abgewandten Rückseite des Bodens (9) zur gemeinsamen Aufnahme der Fixierstange (2) vorgesehen sind.

16. Halteelement nach einem der Ansprüche 10 bis 15, **dadurch gekennzeichnet, dass** auf einer Rückseite der Wippe (5) der etwa rechtwinklig von dieser abragende, etwa in Höhe der Zapfen (14) verlaufende Arretiersteg (17) vorgesehen ist, der mit einer im Boden (9) des Gehäuses (4) gebildeten Auflaufkulisse (18) und dem zwischen Auflaufkulisse (18) und Arretiersteg (17) hindurchgeführten Gurt (3) solcherart korrespondiert, dass über die verschiedenen Kippwinkelstellungen der Wippe (5) hinweg deren Schließ-Stellung, Hemm-Stellung und Verschiebe-Stellung erzielt ist.

17. Halteelement nach einem der Ansprüche 2 bis 16, **dadurch gekennzeichnet, dass** ein Ende des Arretiersteges (17) der Wippe (5) bei einer Drehbewegung der Wippe (5) in ihre einzelnen Kippwinkelstellungen auf einer gedachten Bewegungsbahn (21) solcherart geführt ist, dass sich das Ende des Arretiersteges (17) einer im Boden (9) des Gehäuses (4) gebildeten Auflaufkulisse (18) graduell bis zur völligen Klemmwirkung von Arretiersteg (17), Gurt (3) und Auflaufkulisse (18) nähert.

18. Halteelement nach einem der Ansprüche 9 bis 17, **dadurch gekennzeichnet, dass** innenseitig der Schultern (10) des Gehäuses (4) hiervon abragende Auflauframpen (19) gebildet sind, die solcherart mit Stirnseiten (20) der kippfähigen Wippe (5) zusammenwirken, dass diese in ihrer Schließ-Stellung zusätzlich zu ihrer Anlage am Quersteg (11) von den Auflauframpen (19) im Gehäuse (4) verrastet und unter Überwindung einer Übertotpunktwirkung wieder lösbar ist.

19. Halteelement nach einem der Ansprüche 9 bis 18, **dadurch gekennzeichnet, dass** die Wippe (5) und das Gehäuse (4) in etwa gleiche Längen aufweisen, und dass der Boden (9) des Gehäuses (4) zwecks Positionierung der Wippe (5) in der Verschiebe-Stellung gegenüber den Schultern (10) des Gehäuses (4) verkürzt ausgeführt ist, so dass eine stärker geneigte Stellung, bzw. zweite Kippwinkelstellung der Wippe (5) gegenüber dem Gehäuse (4) ermöglicht ist.

20. Halteelement nach einem der Ansprüche 4 bis 19, **dadurch gekennzeichnet, dass** wenigstens der erste Wippenschenkel (15) eine dem Gurt (3) zugewandte, gleitkufenartige Ausendung aufweist.

## Claims

1. Holding element (1) for the fastening of components (2) in variable positions to a belt (3) provided on board a motor vehicle, **characterised in that** the holding element (1) consists of a housing (4) carrying the component (2) and arranged on the belt (3) so that it can be shifted in longitudinal direction and of a rocker (5) tiltably arranged on said housing (4), whereby the belt (3) is essentially passed between the rocker (5) and the housing (4) and whereby, as a function of the tilting angle position of the rocker (5) on the housing (4),
• if the rocker (5) is in a closing position, the holding element (1) can be fixed in any position on the belt (3) in a load-resistant manner,
• if the rocker (5) is in a stopping position, the holding element (1) can, in a first longitudinal direction of the belt (3), be fixed in any position on the belt (3) in a manner in which said holding element (1) is self-stopping or at least difficult to shift and, in a second longitudinal direction of the belt (3), the holding element (1) can be shifted freely,
• if said rocker (5) is in a shifting position, the holding element (1) can be freely shifted to any position on the belt (3) in its two longitudinal directions.

2. Holding element according to Claim 1, **characterised in that** the closing position of the rocker (5) is achieved by bringing it into a position which is approximately parallel to the longitudinal extension of the belt (3) and neutral in respect of the tilting angle position, whereby a locking web (17) associated to the rocker (5) is, using a panel (9) associated to the holding element (1), actuated to clamp the belt (3) guided between the locking web (17) and the panel (9).

3. Holding element according to one of the Claims 1 and 2, **characterised in that** in its closing position the rocker (5) is detachably locked into place on the housing (4).

4. Holding element according to the Claims 1 to 3, **characterised in that** if necessary the rocker (5) has first and second rocker tabs (15, 16) converging at an angle relative to one another and forming a common pressure actuating face.

5. Holding element according to the Claims 1 to 4, **characterised in that** in the closing position the rocker (5) of the second rocker tab (16) comes into contact with a transverse web (11) provided on the housing (4).

6. Holding element according to one of the Claims 1 and 2, **characterised in that** the stopping position of the rocker (5) is achieved by its being brought into a position which in respect of the longitudinal extension of the belt (3) is slightly inclined and called first tilting angle position, whereby the first rocker tab (15) and the locking web (17) of the rocker (5) are brought into approximately sliding contact with the belt (3).

7. Holding element according to one of the Claims 1 and 2, **characterised in that** the shifting position of the rocker (5) is achieved by its being brought into a position which in respect of the longitudinal extension of the belt (3) is more heavily inclined and called second tilting angle position, whereby the first rocker tab (15) is brought into manually triggered power contact with the belt (3) and the locking web (17) of the rocker (5) is, if necessary, removed from physical contact with the belt (3).

8. Holding element according to one or several of the foregoing Claims 1 to 7, **characterised in that** the holding element (1) on the belt (3) can be positioned, locked and unlocked with one hand.

9. Holding element according to one or several of the foregoing Claims 1 to 8, **characterised in that** the housing (4) of the holding element (1) is approximately a U-section with the panel (9) with shoulders (10) provided on the end faces of said panel (9), arranged parallel to each other and bridged over at a distance relative to the panel (9) by the transverse web (11) which at one end of the housing (4) limits a passage (12) for the belt (3) passed through it.

10. Holding element according to Claim 9, **characterised in that** the shoulders (10) of the housing (4) are arranged parallel to each other and feature coaxial passage bores (13) for the articulated support of pins (14) provided on the end faces (5) of the rocker (5), said passage bores (13) being provided approximately halfway along said shoulders (10).

11. Holding element according to Claim 10, **characterised in that** pins (14) provided on the end faces of the rocker (5) are arranged approximately halfaway along the rocker (5).

12. Holding element according to one of the Claims 9 and 10, **characterised in that** at least one support (8) for fastening the component (2) is provided on the reverse of the panel (9) of the holding element (4) or on an underside of the holding element (4).

13. Holding element according to Claim 12, **characterised in that** the component (2) held by the support (8) of the holding element (4) is a positioning bar and that this positioning bar (2) carries a retaining net (6) for a bunk (7) in a commercial vehicle, eg a truck, whereby said bunk (7) can be folded if necessary.

14. Holding element according to Claim 13, **characterised in that** a holding element (1) is provided on each belt (3) of the bunk (7) in a truck, whereby at least one belt (3) is fitted and the bunk (7) may be of the folding type.

15. Holding element according to Claim 13, **characterised in that** the support (8) for the positioning bar (2) is designed in the form of support eyes (8) arranged in the area of the reverse side of the panel (9) on the shoulders (10) of the housing (4), which reverse side of the panel (9) is opposite the transverse web (11) and faces away from it and which shoulders (10) are arranged parallel to each other, the support eyes (8) being provided for jointly supporting said positioning bar (2).

16. Holding element according to one of the Claims 10 to 15, **characterised in that** the locking web (17) is provided on the reverse side of the rocker (5), projects from it at approximately right angles, extends approximately at the height of the pins (14) and corresponds with a stopping block (18) provided in the panel (9) of the housing (4) and with the belt (3) passed between said stopping block (18) and locking web (17) so that the rocker (5) can be brought into the closing, stopping and shifting positions via its various tilting angle positions.

17. Holding element according to one of the Claims 2 to 16, **characterised in that** when the rocker (5) is turned one end of the locking web (17) of the rocker (5) is guided into its various individual tilting angle positions on an imaginary course (21) such that the end of the locking web (17) gradually approaches a stopping block (18) in the panel (9) of the housing (4) until a complete clamping effect between locking web (17), belt (3) and stopping block (18) is achieved.

18. Holding element according to one of the Claims 9 to 17, **characterised in that** stopping ramps (19) are provided on the inside of the shoulders (10) of the housing (4), project from said housing (4) and act together with the front faces (20) of the tiltable rocker (5) so that said rocker (5) is locked into place in its closing position by the stopping ramps (19) in the housing (4) in addition to its contact with the transverse web (11) and can be again released by overcoming the effect of a dead-position point.

19. Holding element according to one of the Claims 9 to 18, **characterised in that** the rocker (5) and the housing (4) have approximately the same length and that for the purpose of bringing the rocker (5) into the shifting position the panel (9) of the housing (4) is designed shorter relative to the shoulders (10) of the housing (4) so that a more heavily inclined position of the rocker (5), ie a second tilting angle position, relative to the housing (4) is possible.

20. Holding element according to one of the Claims 4 to 19, **characterised in that** the end of at least the first rocker tab (15) is designed as a sliding skid facing the belt (3).

## Revendications

1. Elément de retenue (1) destiné à retenir, dans une position variable, des composants (2) sur une sangle (3) prévue sur un véhicule automobile, **caractérisé en ce que** l'élément de retenue (1) se compose d'un carter (4) portant le composant (2) et disposé sur la sangle (3) de manière à pouvoir être déplacé dans le sens longitudinal ainsi que d'une bascule (5) logée de manière basculante sur ce carter, auquel cas la sangle (3) passe en particulier entre la bascule (5) et le carter (4) et, en fonction de la position de l'angle de basculement de la bascule (5) sur le carter (4),
- l'élément de retenue (1) est fixé dans une position résistant à l'effort quelconque sur la sangle (3) lorsque la bascule (5) se trouve dans une position de verrouillage,
- l'élément de retenue (1) est fixé dans une position auto-immobilisante, ou au moins difficile à déplacer, quelconque sur la sangle (3) dans un premier sens longitudinal de la sangle (3) et peut être déplacé à volonté sur la sangle (3) dans un deuxième sens longitudinal de la sangle (3) lorsque la bascule (5) se trouve dans une position d'immobilisation,
- l'élément de retenue (1) peut être déplacé à volonté dans une position quelconque sur la sangle (3) dans les deux sens longitudinaux de la sangle lorsque la bascule (5) se trouve dans une position de déplacement.

2. Elément de retenue selon la revendication 1, **caractérisé en ce que** la position de verrouillage de la bascule (5) est assurée en la positionnant dans une position sensiblement parallèle au cheminement longitudinal de la sangle (3)/dans une position neutre de l'angle de basculement, auquel cas une nervure d'arrêt (17) prévue sur la bascule (5) coince, avec un fond (9) prévu sur l'élément de retenue (1), la sangle (3) passant entre la nervure d'arrêt (17) et le fond (9).

3. Elément de retenue selon l'une des revendications 1 et 2, **caractérisé en ce que** la bascule (5) est encrantée, en position de verrouillage, de manière déverrouillable sur le carter (4).

4. Elément de retenue selon les revendications 1 à 3, **caractérisé en ce que** la bascule (5) présente le cas échéant une première et une deuxième branche (15, 16) qui forment un angle l'une par rapport à l'autre et qui présentent une surface de pression commune.

5. Elément de retenue selon les revendications 1 à 4, **caractérisé en ce que** la deuxième branche de la bascule (16) est appliquée, en position de verrouillage de la bascule (5), contre une traverse (11) prévue sur le carter (4).

6. Elément de retenue selon l'une des revendications 1 et 2, **caractérisé en ce que** la position d'immobilisation de la bascule (5) est assurée en la positionnant dans une position peu inclinée par rapport au cheminement longitudinal de la sangle (3) / dans une première position de l'angle de basculement (3), auquel cas la première branche de la bascule (15) et la nervure d'arrêt (17) de la balance (5) touchent la sangle (5) de manière sensiblement glissante.

7. Elément de retenue selon l'une des revendications 1 et 2, **caractérisé en ce que** la position de déplacement de la balance (5) est assurée en la positionnant dans une position plus inclinée par rapport au cheminement longitudinal de la sangle (3) / dans une deuxième position de l'angle de basculement, auquel cas la première branche de la bascule (15) est amenée, à la main, dans une position d'adhérence avec la sangle (3) et la nervure d'arrêt (17) de la bascule (5) n'a, le cas échéant, plus de contact avec la sangle (3).

8. Elément de retenue selon l'une des revendications 1 à 7 précitées, **caractérisé en ce que** le positionnement ainsi que le verrouillage et le déverrouillage de l'élément de retenue (1) sur la sangle (3) s'effectuent avec une seule main.

9. Elément de retenue selon l'une ou plusieurs des revendications 1 à 8 précitées, **caractérisé en ce que** le carter (4) de l'élément de retenue (1) forme sensiblement un profilé en U avec le fond (9) et les épaules (10) prévues sur la face frontale de ce fond et parallèles l'une par rapport à l'autre, auquel cas les épaules sont pontées, à une certaine distance du fond (9), par la traverse (11) qui limite sur une extrémité du carter (4) le passage (12) de la sangle (3) à travers ce carter.

10. Elément de retenue selon la revendication 9, **caractérisé en ce que** les épaules (10) parallèles l'une par rapport à l'autre du carter (4) présentent, sensiblement dans la moitié de leur longueur, des perçages coaxiaux (13) destinés au logement articulé de tenons (14) prévus sur la face frontale de la bascule (5).

11. Elément de retenue selon la revendication 10, **caractérisé en ce que** les tenons (14) prévus sur la face frontale de la bascule (5) sont disposés sensiblement à la moitié de la longueur de la bascule (5).

12. Elément de retenue selon l'une des revendications 9 et 10, **caractérisé en ce qu'**au moins un logement (8) destiné à la fixation du composant (2) est prévu sur la face arrière du fond (9) de l'élément de retenue (4) ou sur la face inférieure de l'élément de retenue (4).

13. Elément de retenue selon la revendication 12, **caractérisé en ce que** le composant (2) supporté par le logement (8) de l'élément de retenue (4) est une barre de fixation et que cette barre de fixation (2) supporte un filet anti-chute (6) d'une couchette (7), rabattable le cas échéant, d'un véhicule industriel ou camion.

14. Elément de retenue selon la revendication 13, **caractérisé en ce qu'**un élément de retenue (1) est disposé sur au moins une sangle (3) de la couchette (7), rabattable le cas échéant, d'un camion.

15. Elément de retenue selon la revendication 13, **caractérisé en ce que** les logements (8) de la barre de fixation (2) sont réalisés sous forme d'oeillets de logement (8) qui sont prévus sur les épaules (10) parallèles l'une par rapport à l'autre du carter (4) dans la zone de la face arrière du fond (9) opposée à la traverse (11) pour loger conjointement la barre de fixation (2).

16. Elément de retenue selon l'une des revendications 10 à 15, **caractérisé en ce que** la nervure d'arrêt (17), formant un angle sensiblement rectangulaire par rapport à la bascule (5) et disposé sensiblement au niveau des tenons (14), est prévue sur la face arrière de la bascule (5), auquel cas cette nervure correspond avec une coulisse inclinée (18), prévue dans le fond (9) du carter (4), et la sangle (3) passant entre la coulisse inclinée (18) et la nervure d'arrêt (17) de telle manière que la position de verrouillage, la position d'immobilisation et la position de déplacement de la bascule soient réalisées par l'intermédiaire des différentes positions de l'angle de basculement de la bascule (5).

17. Elément de retenue selon l'une des revendications 2 à 16, **caractérisé en ce qu'**une extrémité de la nervure d'arrêt (17) de la bascule (5) est guidée, en positionnant la bascule (5) dans ses différentes positions de l'angle de basculement, sur une trajectoire imaginée (21) de telle manière que l'extrémité de la nervure d'arrêt (17) s'approche progressivement d'une coulisse inclinée (18) prévue dans le fond (9) du carter (4) jusqu'à la position de verrouillage complet de la nervure d'arrêt (17), de la sangle (3) et de la coulisse inclinée (18).

18. Elément de retenue selon l'une des revendications 9 à 17, **caractérisé en ce que** des rampes inclinées (19), faisant saillie par rapport au carter (4), sont prévues sur la face intérieure des épaules (10) du carter (4), auquel cas elles correspondent avec les faces frontales (20) de la bascule (5) en position basculable de telle manière que cette bascule est encrantée en position de verrouillage, en plus de son application contre la traverse (11), par les rampes inclinées (19) prévues dans le carter (4) et peut être déverrouillée à nouveau en surmontant un effet de point mort.

19. Elément de retenue selon l'une des revendications 9 à 18, **caractérisé en ce que** la balance (5) et le carter (4) ont sensiblement la même longueur et que le fond (9) du carter (4) est plus court que les épaules (10) du carter (4) afin de positionner la balance en position de déplacement, ce qui permet de réaliser une position plus fortement inclinée / une deuxième position de l'angle de basculement de la bascule (5) par rapport au carter (4).

20. Elément de retenue selon l'une des revendications 4 à 19, **caractérisé en ce qu'**au moins la première branche (15) de la bascule présente une extrémité en forme de patin orientée vers la sangle (3).
